Europäisches Patentamt

European Patent Office

Office européen des brevets

(19)

(11) Publication number: **0 393 814**
**A1**

## EUROPEAN PATENT APPLICATION

(12)

(21) Application number: 90301386.0

(22) Date of filing: 09.02.90

(51) Int. Cl.5: **G01K 7/16, G01K 7/20**

The title of the invention has been amended (Guidelines for Examination in the EPO, A-III, 7.3).

(30) Priority: **18.02.89 GB 8903734**

(43) Date of publication of application:
**24.10.90 Bulletin 90/43**

(84) Designated Contracting States:
**DE FR GB IT**

(71) Applicant: **EATON LIMITED**
**Eaton House Staines Road**
**Hounslow Middlesex TW4 5DX(GB)**

(72) Inventor: **Everett, Russell James**
**Westwinds, Church Lane, Welborne**
**E. Dereham, Norfolk NR20 3LN1(GB)**

(74) Representative: **Douglas, John Andrew**
**Eaton House Staines Road**
**Hounslow Middlesex TW4 5DX(GB)**

(54) **Temperature sensor for an electrical load resistor.**

(57) A dynamic braking or other load resistor (1) operates at high voltages and can get dangerously hot very quickly, and so temperature sensing to be useful must react correspondingly quickly and yet isolate the high voltages, ac or dc. Accordingly, the load resistor is made one side of a bridge, and off balance voltages are detected by a comparator (19) arranged to trip at one or more voltages designated danger - indicating. When the comparator trips, a pulse generator (40,46,48) generates different eg. repetition rates, and these are transduced, and trans-mitted as electromagnetic wave pulses over fibre optics to a receiving position.

A pair of retriggerable and appropriately timed monostables then determine and give a binary read out according to whether the received pulses are (a) of a safe-denoting repetition rate, or (b) are either absent (ie. equipment failed) or of the danger-indicating frequency (load resistor in danger of failing). The danger conditions under (b) may give warning and/or may switch off all energization.

Fig.2B

Fig.2B (cont.)

EP 0 393 814 A1

## Temperature Sensing

The invention relates to temperature measuring, or excess temperature indicating, particularly in environments which are inaccessible, hostile (e.g. at high voltages etc). Sensing temperatures from some distance away (e.g. with a bimetallic thermal switch in cooling air leaving the environment), can be unreliable. For instance the incoming cooling air temperature can be uncertain or thermal inertia can cause delays in sensing rapid changes. The environment or the temperatures involved may not lend itself to direct or optical observations, thermo-couples or thermistors etc.

Particularly, it is desired to sense temperatures of electrical resistors subject to sudden large loads, such as dynamic braking resistors (DBR) for locomotives and the like. Overloads can cause sudden overheating and consequent resistor failures whatever the cooling arrangements; in addition, forced air cooling is ineffective if the blower fails or the air-ducts become blocked.

The main object of the invention is the rapid signalling of excess temperatures of the component, whereon an alarm is given or a power supply is cut out as soon as possible after the component has been so subjected. It is another object in the case of cooling a resistor to make use of the voltage developed by the resistor to energize the temperature sensing system without undue exposure of fragile components themselves to such developed voltages. Alternative designs may be such that either AC or DC developed voltages should be easily catered for (e.g. without undue modifications between AC and DC), although DBR's are more usually operated at DC. Not only may high voltages be developed across them, but the entire resistors may be subjected to kilovolts with respect to earth potential. Not only the emergency evaluating and sensing circuits, but also the control circuit for interrupting the current in the DBR in an emergency should be as far as possible electrically isolated from the high voltages of the component DBR.

Accordingly features of the invention are a fibre-optic link between a transmitter and a receiver, the transmitter containing means to detect a change in electrical resistance (nearly all conductors have a well-defined or calibratable temperature coefficient), and an electrical/optical signal transducer, so arranged that the transmitted signal has at least three alternative parameters, two according to temperature being sensed respectively safe or unsafe, and preferably a third (which may be zero, but need not be zero) denoting non-operation of the transmitting system.

Preferably, the safe and unsafe signals involve mutually distinguishable (such as by pulse repetition frequency) optical pulse trains, and a receiver able to distinguish between the said three parameters. Thus a sort of frequency modulation is used to encode these alternative signals transmitted along a fibre-optic link.

It is desirable for the transmitter pulses to be inhibited for a short time after DBR is initially energized. This allows time for the transmitter's electronics to stabilize, so tht false signals are not transmitted and perhaps confuse the receiver. For the same reason, if the DBR voltage is too low, circuits energized therefrom may generate false, and confusable signals, and again the pulses should be inhibited from being transmitted. Yet again, pulses are prevented from being transmitted, desirably, immediately after any de-energization of the component to be sensed.

US-A-4 035 692 discloses a dynamic braking resistor with temperature sensing or warning, using changes in its resistance, as indicated by measurements of the voltage developed across the resistor and after correcting for variations in current always present in dynamic braking. The present invention aims to maintain these artifices (to avoid the above drawbacks of sensing cooling air temperatures), but to avoid the requirement in US-A-4 035 692 to deal with current and voltage in two separate signal channels. Two independent channels need more stages including a subtraction step, means such as a negative feedback resistor to match the two gains, and also means to compensate for different offset voltages, bias currents and thermal drifts.

A feature of the invention is to use the voltage developed across the resistor to power the resistance sensing electronic circuitry chips, zeners etc.

Above all, US-A-4 035 692 fails to address itself to the problem of protecting components, making sensitve measurements of small and critical changes in resistance (and hence voltage), at points which themselves may operate at hundreds or thousands of volts potential, and at high temperatures.

In the drawing:-

Fig 1 shows in block schematic form the main inventive items, both the transmitting and the receiving items:

Fig 2A shows a transmitter circuit embodiment suitable for dc:

Fig 2B shows an improved and more detailed version of the 2A transmitter circuit:

Fig 3 shows distinguishable safe and unsafe pulse trains of Fig 2, in this case different repetition frequencies of identical individual pulses:

Fig 4 shows an ac-powered transmitter embodiment alternative to Fig 2 and equally cooperable:

Fig 5 shows a preferred receiver alarm unit detail:

Fig 6A shows another receiver circuit detail;

Fig 6B shows a more detailed and rationalised version of the Fig 6A receiver circuit; and

Fig 7 is a timing diagram showing three possible input pulse trains, also three possible output pulse trains at each of two output points and on the same time scale as the three input trains.

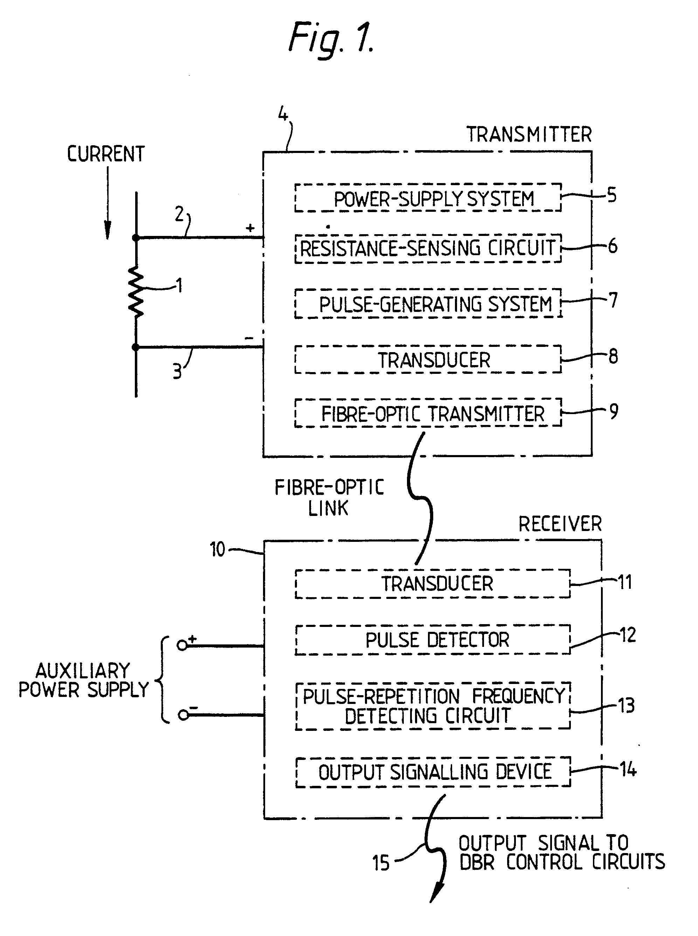

Referring to Fig 1, a dynamic braking resistor element 1 takes current from a dc electric generator (not shown) actuated in one of various known manners by a braking routine or de-energizing a traction motor (not shown). The current will assist stopping or slowing down of the drive and can vary widely. It is required to know the temperature of resistor 1, accordingly the voltage across the resistor is coupled by conductors schematically shown at 2, 3 to a nearby transmitter 4, which has a power supply system 5 deriving power from the direct voltage intermittently available from leads 2,3. The resistance across 2,3 is sensed by a resistance sensing circuit 6 to give a measure of the resistance of element 1.

In these terms, the transmitter uses teaching of US-A-4 035 692 except that the latter does not derive a power supply from the input leads. The output of the resistance sensing circuit is a varying voltage which is fed to a voltage-sensitive pulse-generator 7 which generates a train of spaced pulses converted by a LED or other transducer 8 into light (or infra red electromagnetic wave) pulses which are directed down an insulating, isolating and flexible fibre optic path 9.

The light pulse train is received at a receiver 10, converted by a photoelectric transducer 11 to electric pulses detected at e.g. a trigger circuit 12 from which a parameter such as frequency, mark-space ratio, width or amplitude (frequency is presently preferred, for denoting the resistance change sensings) is derived in an electronic circuit 13. The actual temperature of element 1 may be indicated by circuit 13, or just two conditions "too hot", and "satisfactory" may be signalled. For instance "satisfactory" can be signalled by a specific pulse parameter, and "too hot" by another.

Preferably a third condition, i.e. "no pulses received" can be recognised, meaning that the transmitter was faulty, a second alarm condition because a dangerous overheating of element 1 could pass unnoticed and not be detected at all. Thus an output signalling device 14 could recognise three conditions, only one of which would be acceptable.

The "too hot" signal could be used via path 15 to switch off element 1, and so save its destruction or even a fire or explosion.

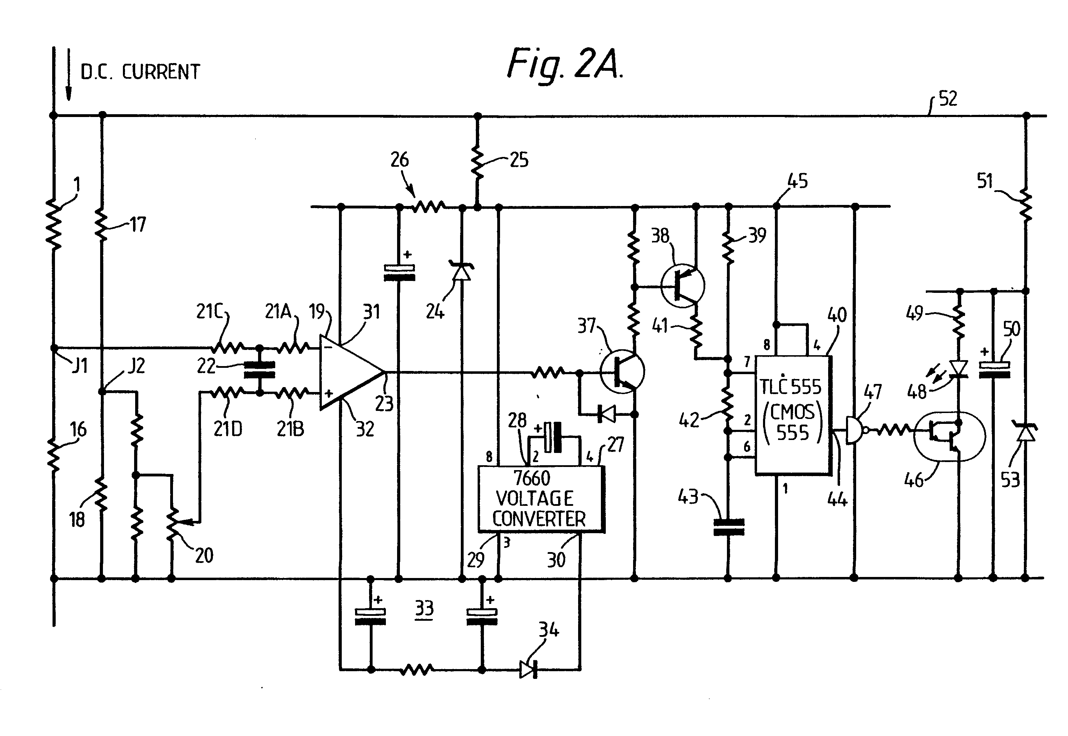

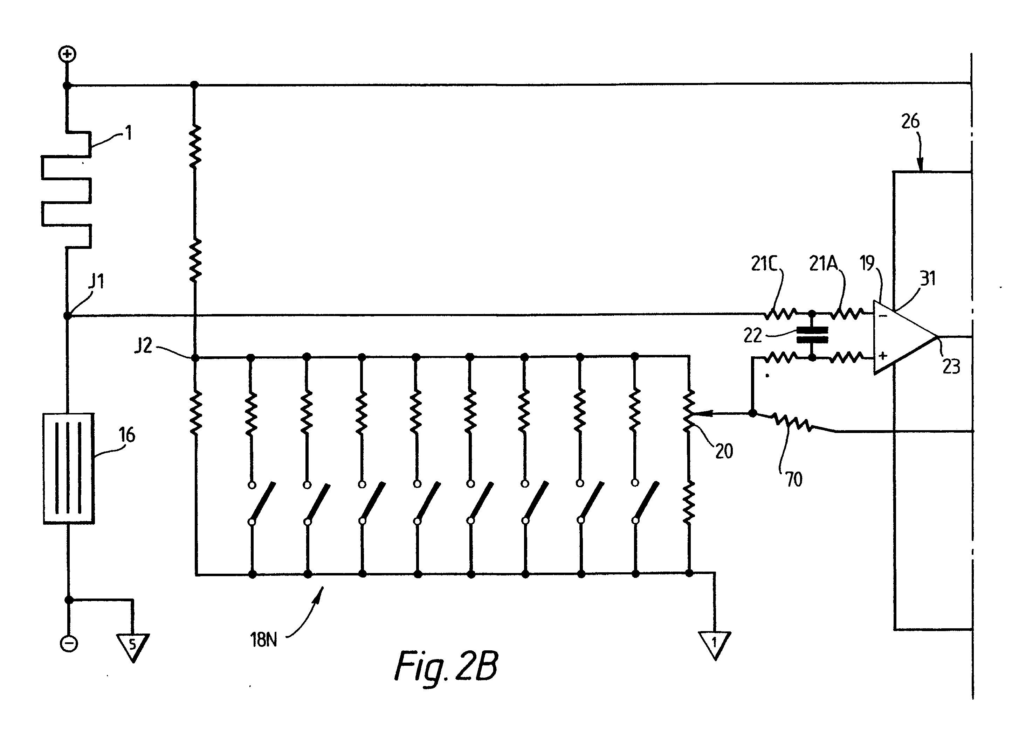

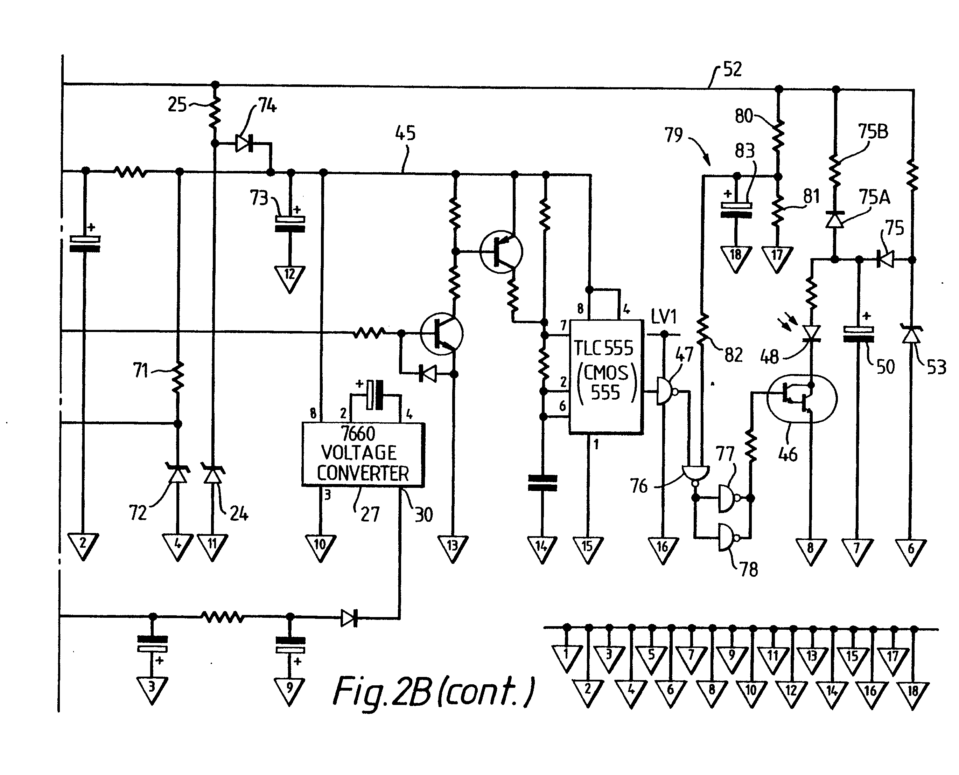

The dc transmitter 4 may be as in Fig 2A, in which resistance 1 receives current in series with a resistor 16 insensitive to temperature (many types being known), the series pair being in parallel with another series resistor pair 17, 18 in a Wheatstone bridge or similar circuit, which is very sensitive to small out-of-balance conditions, i.e. when R1/R16 differs slightly from R17/R18. The voltages at the two junctions J1 and J2 are compared for such slight differences by a comparator 19 with a variable resistor 20 interposed to enable a trip presetting. (R1 means the ohmic resistance of element 1, etc). R18 may be made variable in steps as shown at resistor network 18N in Fig 2B, to cater for different alarm temperatures.

Resistances 16 and 18 may be ohmically much smaller than 1, 17, and their junctions J1, J2 can easily have equalised source impedances (through which input bias currents of the comparator flow); without this equalisation off-set voltages will appear at the input of comparator 19 due to the input bias currents being derived via differing source impedances. Sufficiently large series resistors 21C, 21D can be used to swamp, or effectively equalize those differing source impedances, if necessary. Apart from swamping these differentials, by careful selection of the 21C,21D and 22 values, or of values of a more complicated RC input network if necessary, the comparator can be adapted to respond to too high an apparent or surface temperature of the DBR rather than too high an <u>average</u> internal and external (i.e. throughout) temperature (which latter is anticipated will usually be of more interest). In some arrangements, the internal temperature of a load resistor is much less important or critical than preventing excess temperature at its surface.

Further resistors 21A, 21B prevent damage from spikes, caused by rapid dischargings of a just substantial enough capacitor 22. This capacitor which may be needed, to smooth fast current fluctuations at the comparator input not likely to have arisen from temperature changes. For instance the differing source impedances can cause transients across the DBR unwantedly to trip the comparator. When DBR 1 exceeds a preset value (as set by potentiometer 20 and by network 18N if used) the comparator output 23 goes positive.

If the wiper of potentiometer 20 lost contact with the internal resistor through wear or burn-out, the resulting open circuit condition would cause comparator output to stay reassuringly negative, no matter how hot the DBR became. To avoid this failure to alarm, Fig 2B shows a resistor 70, connected to a positive voltage and high valued enough (10M) to produce no effect except on such open circuiting of the wiper. The positive voltage should be stable enough to prevent fluctuations feeding through to the contacting wiper; so a zener 72 and ballast resistor 71 will give such stability and to drive the comparator output positive when the wiper is non-contacting.

Comparator 19 preferably is an appropriately connected instrumental grade operational amplifier (e.g. OP07). It requires a split power supply relative to earth. A zener diode 24 fed from the DBR currents through a ballast resistor 25 provides the positive half, at positive supply terminal 31, decoupled if necessary from the positive lines 52 and 45 by RC decoupler 26. The negative half supply originates from a voltage converter chip 27 (e.g. a 7660), which outputs a negative voltage at output 30, equal to its positive voltage input between terminals 28, 29. Output 30 arrives at negative supply terminal 32 via RC decoupler 33 and a series diode 34 specified for a 7660-circuit. A reservoir capacitor 73 may be added as shown in Fig 2B, for extra stability and low ac source impedance, but the zener 24 must then be protected from the possibility of discharge of this capacitor through it. Accordingly, the zener is connected through a diode 74 to the positive line and capacitor 73. The line is now protected, too, from erroneous negative voltages.

If the 7660 chip 27 or its attendant components should fail, the comparator output 23 would probably go positive (whatever the nature of the comparator input signals), the danger condition normally indicating DBR overheated. Thus it is an advantage to arrange the chip 27 to signal danger when it fails, by appropriate choice of polarities.

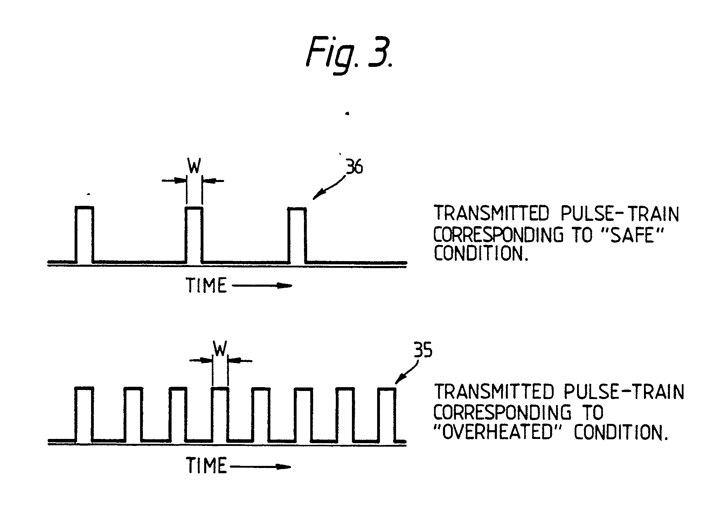

Referring to Fig 3, a pulse width W remains constant while repetition rate is preferred to increase for the unacceptably overheated condition of resistor 1, as per pulse train 35, to be able to discriminate from a lower rate pulse train as exaggeratedly exemplified by train 36 which denotes "safe" condition of the DBR resistor not needing alarm routines.

Referring again to Fig 2, a negative comparator output at 23 is considered safe, and is arranged to maintain cascaded transistors 37 and 38 off, so that a resistor 39 is in circuit with a "555" timer 40 connected as an astable multivibrator.

If point 23 goes positive, corresponding to resistor 1 increasing to an overheated value and unbalancing the Wheatstone bridge, transistors 37, 38 switch on, putting a resistor 41 in shunt with resistor 39. The paralleled pair 39, 41 combine with resistor 42 and capacitor 43, to decrease their RC constant and increase the multivibrator pulse output frequency at a terminal 44 in known manner. Details are a diode to prevent a reversebias input to transistor 37, and use of a CMOS version of "555" timer 40 to economise power drawn from supply line 45 (also derived from the DBR bias and zener 24). A bipolar PNP/NPN pair is preferred for elements 37, 38.

The multivibrator pulses, at fast (unsafe) or slow rate, are fed to a Darlington pair transistor 46 via a CMOS inverting gate 47 to drive an LED or other electromagnetic wave generator 48 via a ballast resistor 49. Gate 47 may be supplemented by further gates 76, 77, 78 in known manner to assist inversion. Also it may have a second input, from a network 79 to detect unreliably low short-term or long-term supply voltage, as will be further described below.

High current pulses are needed to drive "light" transmitter diode 48, and these are enabled by a high enough value shunt capacitor 50 ballasted by a series resistor 51 connected to a supply line 52. Lines 52 and 45 are electrically separated especially by use of a separate zener diode 53, which tends to isolate any tendency for the high power pulse output from Darlington 46 to react back via power line 52 into power line 45, and thence to cross-couple into the earlier stages, rendering the whole signal processing unstable.If desired, a diode 75 (Fig 2B) can protect the zener 53 from discharge from capacitor 50, or prevent negative voltages, analogous to the function of diode 74. Capacitor 50 can cause another problem, i.e. spurious alarming after the DBR 1 is switched off; the problem and its solution are as follows.

When resistor 1 is switched off, the voltage on stabilized supply line 45 collapses slowly due to capacitors 73, 22,33 retaining charge. Therefore comparators 27,40 continue to be driven but uncertainly, and the rapidly de-energizing DBR sensing bridge also may give spurious unbalanced output -overall, there is risk that the "DBR overheated" alarm signal can be transmitted, received and processed, most undesirably, after the DBR is switched off. To combat this, a further diode 75A (and a series resistor 75B if desired), normally reverse biased, is connected between the capacitor 50 and the unstabilized supply line 52 as shown. Therefore the capacitor discharges rapidly through the bridge, and Darling 46 is de-energized and inhibits further transmissions, as soon as the DBR and line 52 are de-energized. Resistor 75B can be used to slow the discharge of capacitor 50 and protect the diode 75A, indeed the resistor will probably be necessary if ac energization of the DBR is used, in order to divide the voltage of line 52, and maintain the voltage on capacitor 50 to an acceptable level.

A Darlington transistor is used at 46, again for electrical economy (all power is derived ultimately from the voltage developed across the DBR), because its base drive requirement is minimal. Again for economy, transmittor diode 48 and thus the Darlington input should ideally be mostly OFF as shown by "safe" pulse train 36 in Fig 3; however, the "555" timer chip 40 cannot operate this way, so it is run with mostly ON pulses, and the CMOS gate 47 converts them to mostly OFF (i.e. a low duty cycle train). Frequency modulation to distinguish safe and unsafe voltages across resistor 1, is also chosen mainly for economy, as it imposes minimum supply loads. Comparator 19 may be provided with a small amount of switching hysteresis, by adding a large positive feedback resistor across it.

Referring to Fig 2B, gate 76 ensures that transistor 46 is OFF whenever the supply voltage on rail 52 is considered unreliably low, by action of network 79, which includes resistors 80, 81, 82 to feed a proportion of the unstabilized supply 52 to one of the two inputs of the inverter 76, the other input of which is supplied from the stabilized supply 45. Therefore, if supply 52 goes low, the output of 76 is high, those of 77 and 78 go low and no output can pass through Darlington 46. A capacitor 83 can be used, to keep that one input of gate 76 low for a finite time after every switch-on. The Darlington can thus be blocked, and no unnecessary alarm condition can be prematurely set up, until the transmitter electronics have "settled down".

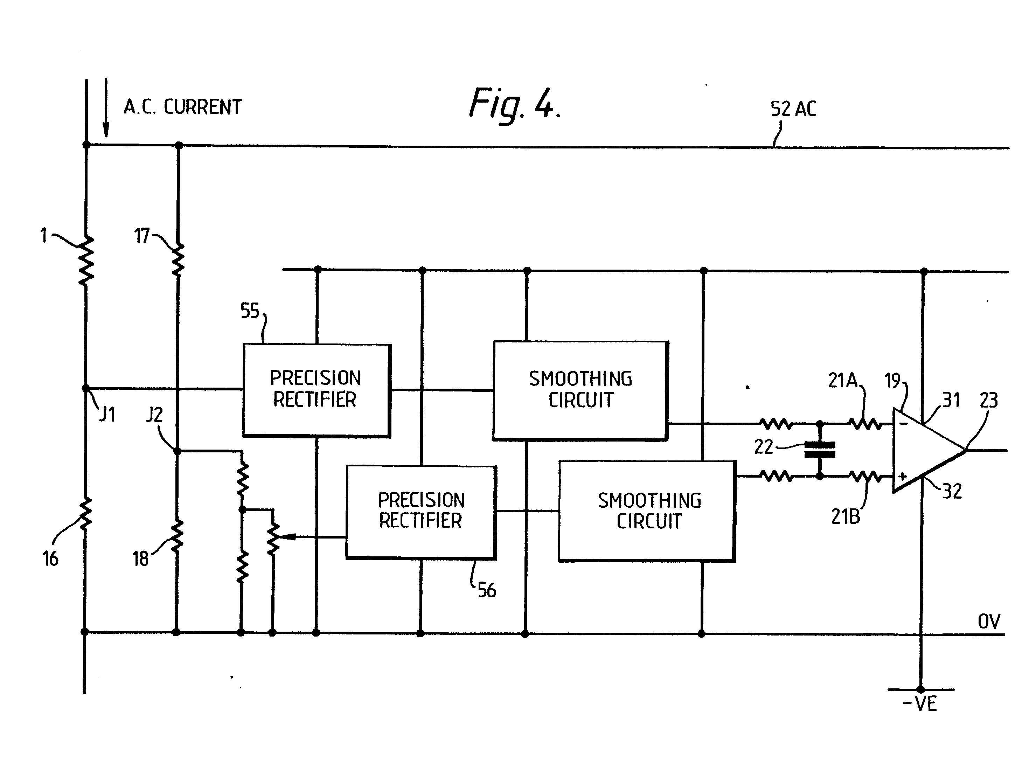

Referring now to Fig 4, for use with ac power instead of dc, this circuit would substitute for the components to the left of comparator 19 as viewed in Fig 2. The zeners might need ballast resistors with series diodes, and need more shunt capacitances, but such changes would be routine to the skilled man.

The Fig 4 details include respective half or full wave "precision" rectifier circuits 55 and 56 coupled to Wheatstone bridge junctions J1, J2, now energised by the AC dissipated in the DBR 1, and the smoothing filters shown. Precision peak level detectors may be preferred - their details are well-known. Resistor 16 of Fig 2 can be replaced by a current transformer and a burden resistor.

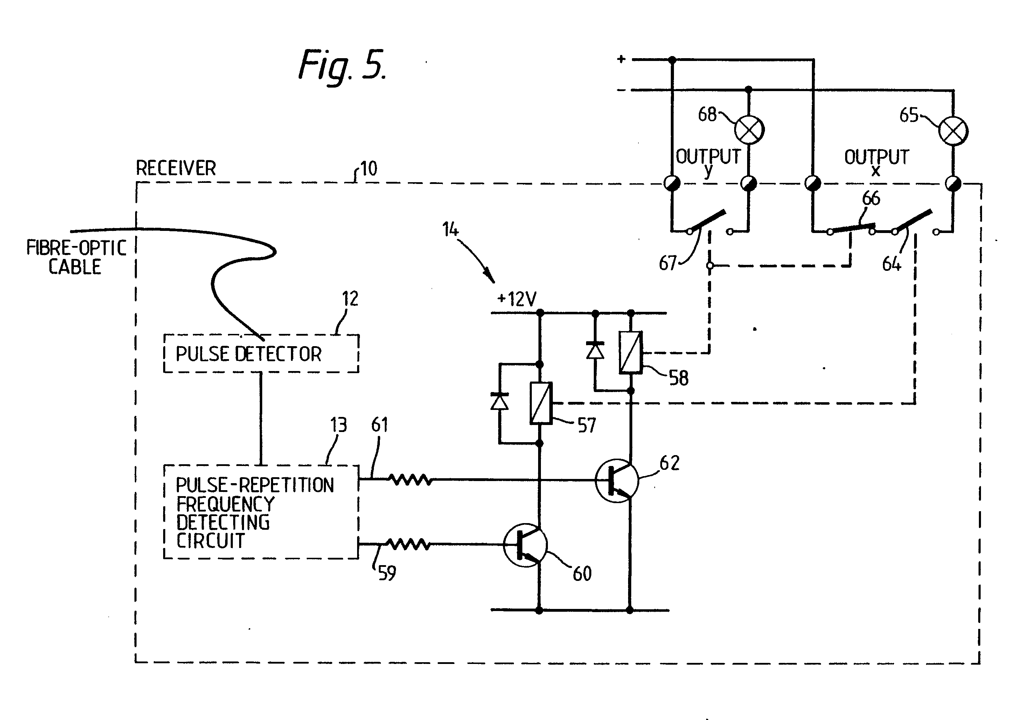

Referring again to Fig 1, the receiver for light pulses from the fibre-optic comprises a photo-diode or photo-transistor and amplifier, to deliver electrical pulses, a frequency detecting circuit and an output signalling device 14 (see Fig 1), e.g. using mechanical or solid state relays, such as SCR's. Pulse detectors can typically contain an R-C filter circuit with a time-constant such that its analogue output voltage varies with the incoming pulse frequency. Since we may only want to distinguish safe and unsafe conditions, device 14 need only be digital and change state according to excess output level over a reference voltage. Alternatively, a retriggerable monostable multivibrator can be arranged to detect the frequency of the pulses, its output remaining "SET" for high pulse frequencies only and fluctuating for lower pulse frequencies. For three possible output states, a circuit such as that of Fig 5 giving two digital outputs is required.

Referring to Fig 5, a receiver required to provide one of three alternative output states, with the desired volt-free relay contacts, includes two two-way output relays 57, 58 to cater for three states.

As already referred to in conjunction with Fig 1, electrical pulses are delivered, by a transducer and pulse detector 12 connected to the fibre optic, to a pulse-repetition rate measuring circuit 13. Circuit 13 gives output only on line 59 if the pulse rate is lower than a "safe" rate, which can render a NPN transistor 60 conductive and energize only relay 57. Circuit 13 will likewise energize relay 58 only, through line 61 and similar transistor 62, whenever the incoming pulse rate is "unsafely" high.

If no pulses are received, neither line 59 nor line 61 will energize its associated relay.

Relay 57 when energized switches ON a normally OFF contact 64, and thereby illuminates a "satisfactory", e.g. green lamp 65 over a normally closed contact 66. The green light shows not only that "safe" low frequency pulses are being received (signifying a DBR operating at safe temperatures), but also that pulses are being received. If the transmitter or receiver, relays etc failed, the green light 65 (e.g. "DBR IN NORMAL OPERATION") would not show. If pulses are received, but "unsafe" ones, relay 58 is activated and switches normally ON contact 66 OFF, but operates in another circuit, to close a second contact 67 which is normally OFF. Thus relay 58 controls two contacts, relay 57 only one. Contact 67, when closed, lights a red warning lamp 68 (e.g. "DBR OVERHEATED"). Thus three possible states are provided by two relays and two lamps.

Obviously, customers may not need volt-free relay contacts, and there are many other ways of transmitting two different pulse trains dependant on a resistance or voltage change at a DBR, and of receiving and indicating which of the trains is being received, or if neither is. However, the skilled man will appreciate that the invention comprises the following important features:-

1. Detecting safe and unsafe resistance values of an operative DBR, and signalling them over a fibre optic by electromagnetic wave pulses (light, IR etc):

2. Receiving and processing the pulses to exhibit one of three conditions, i.e. DBR normal, DBR overheated, or system failure conditions:

3. Powering the pulse generator by the DBR energization:

4. Using a bridge circuit at or near balance to react to small changes in the DBR resistance (with the attendant advantage that electric current changes have no primary effect on the sensitive bridge output processed):

5. Electrically, isolating the energizations of the pulse amplifier and the bridge output detector from each other; and

6. Using two receiver signal channels and lamps, with three on-off contacts, to record the three conditions.

As compared with US-A-4 035 692, which also responds rapidly to heat-sensitve electrical resistance rather than the slower heat transfer, e.g. by detecting cooling air temperatures, the present invention provides:

a) Electrical isolation (by fibre optic) between the DBR at high voltage and the indicator elements apt to be handled by operators:

b) Using the DBR voltage and current to power the pulse transmitter:

c) Providing three output conditions:

d) Capitalizing on a recognizable well-known Wheatstone or other bridge:

(e) Economies in electrical components and indeed a stage:

(f) Avoiding or reducing offset voltage differentials at the comparator input; and

(g) Less sensitivity to thermal drifts in bias currents.

Receiver - detailed circuitry & functional description

The Receiver must be able to detect the pulses being transmitted along the fibre-optic link and provide 3 output states corresponding to

(a) No Operation (i.e. DBR not in operation & the Transmitter inactive).

(b) Safe Operation. (i.e. DBR is in operation but the temperature of the resistor elements is not excessive).

(c) Overheated. (i.e. DBR is in operation and the temperature of the resistor elements is excessive).

A block diagram of the Receiver is shown in Fig 1. This diagram assumes that frequency modulation (FM) is performed on the pulse-train to be transmitted along the fibre-optic link. Fig 5 shows a block 13 which identifies the rate of pulses received (and if any are received).

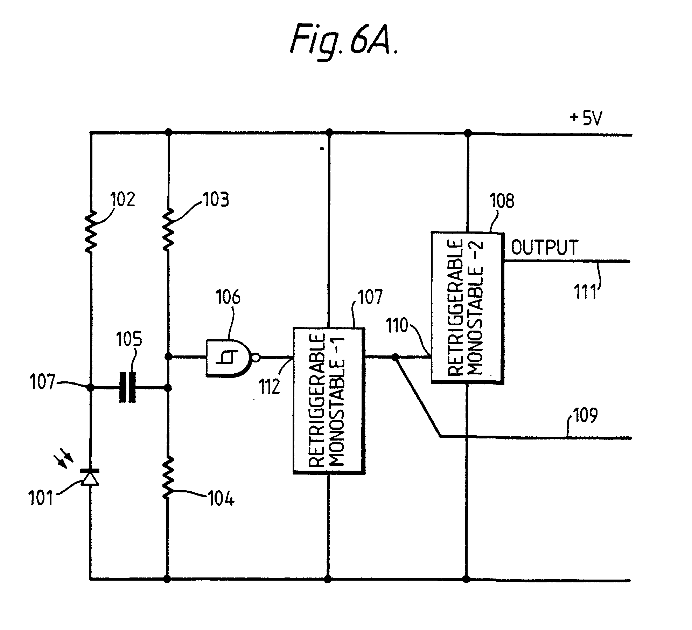

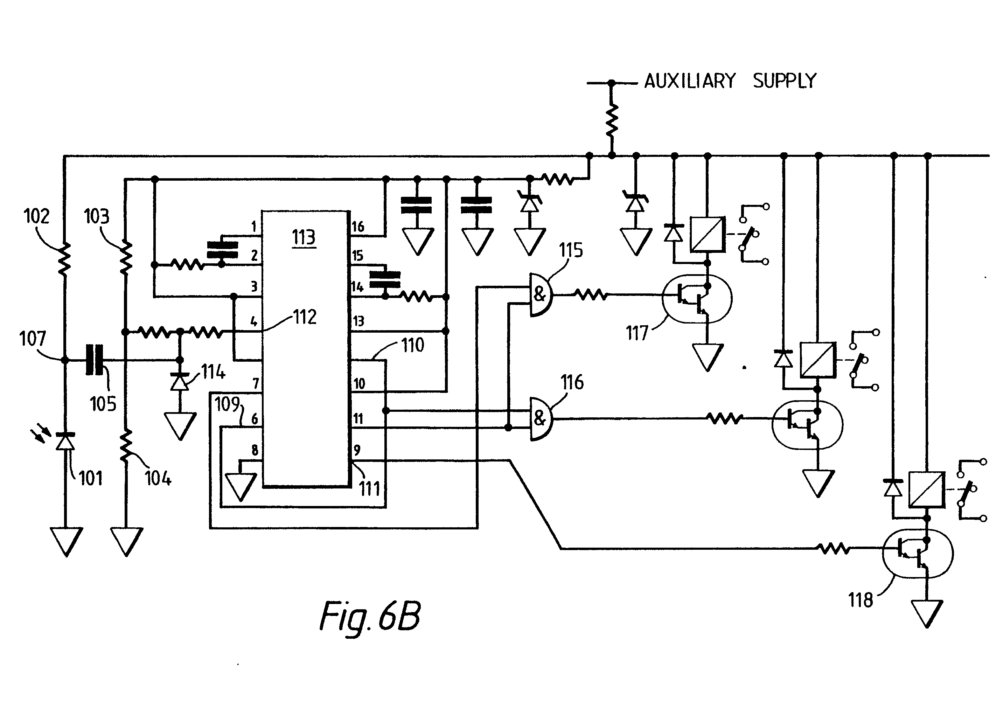

A more detailed diagram of block 13 is shown in fig 6. The Pulse-Repetition Frequency Detecting Circuit can be implemented in several ways, one of them utilising retriggerable monostable multivibrators. Retriggerable monostable multivibrators are shown in Fig 6; they are presently preferred because by their digital approach they provide the fastest means of detecting changes in frequency of the transmitted pulse-train. Retriggerable monostables can renew the a-stable state for the usual period, even from a previously triggered, a-stable condition.

The Fig. 6A Pulse Detecting Circuit is composed of photo-diode 101, Resistors 102, 103 and 104, Capacitor 105, and the NAND-Schmitt 106. This NAND-Schmitt should be a CMOS type device so that advantage can be taken of its internal switching threshold of about 1/2 Vcc in both switching directions.

The purpose of Resistors 103 and 104 is to provide a bias at the input of circuit 106 so that its input experiences a standing voltage of about 3/4 Vcc (i.e. logic 1). Due to the extremely high input resistance of a CMOS gate, resistors 103 and 104 can be of relatively high impedance and this is advantageous in reducing their continuous loading affect on the photo-diode.

The reverse-bias leakage current of photo-diode 101 increases with the incident light pulse from the fibre-optic cable. This causes the voltage at junction point 107 to fall and this falling voltage is a.c. coupled to the input of the NAND Schmitt 106 via the a.c. coupling Capacitor 105. Thus Schmitt 106 gives a logic 1 output pulse with each light-pulse reaching the Receiver via the fibre-optic cable.

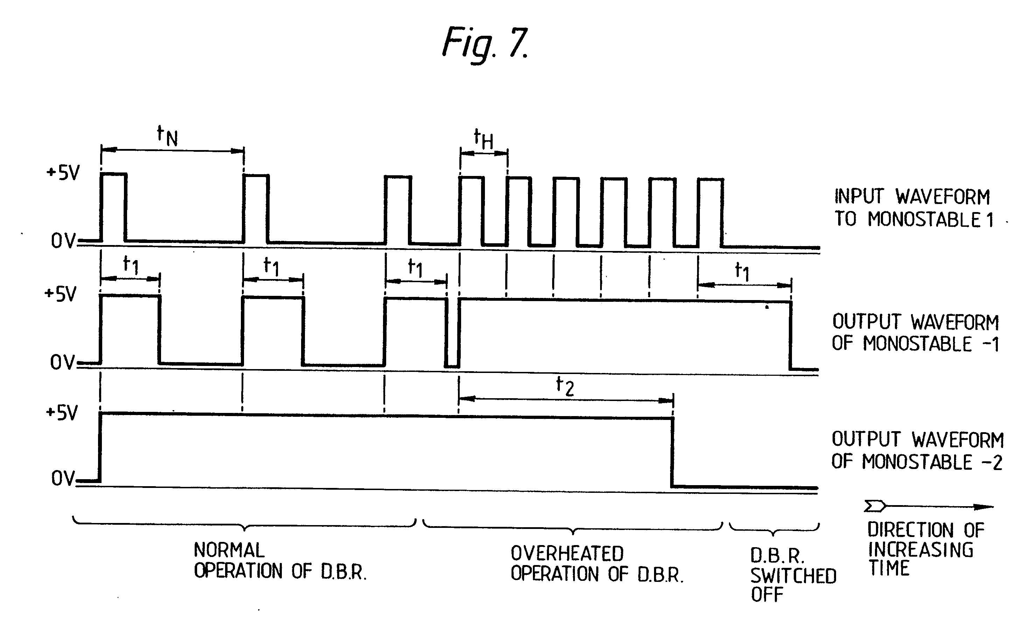

The following explanation of the Pulse Repetition Frequency Detecting Circuit should be read in conjunction with the timing-diagram of fig.7.

The output pulses from IC1 are fed to the input 112 of a Monostable 107 which is of the type arranged to trigger on the rising-edge of the pulses and to be retriggerable. If the time-interval between the incoming pulses at 112 is longer than the a-stable period, $t_1$ of Monostable 107, see the left hand half of the top pulse diagram, then the output 109 of Monostable 107 is another pulse-train of pulses at the same intervals, and of length $t_1$. Conversely, if the time-interval between the incoming pulses is shorter than the a-stable period, $t_1$, see the right hand half of the top pulse diagram, then Monostable 107 will be repeatedly retriggered and its output will remain continuously in its 'Set' state. (See middle diagram right).

The output of Monostable 107, is fed to the input 110 of another Monostable 108, which, like Monostable 107, is arranged to trigger on the rising edge of its input waveform and to be retriggerable. If the output 109 of Monostable 107 is a pulse-train fed at 110, then Monostable 108 will be repeatedly retriggered and its output will remain 'Set'. See lowest pulse diagram, left and centre.

However, if the output 109 of Monostable 107 is a static level (either 'Set' or 'Reset'), then Monostable 108 will not be triggered at all at 110 and its output will remain 'Reset'. (See right hand part of lowest diagram). The a-stable period $t_2$ of monostable 108 should substantially exceed that, $t_1$ of unit 107 and also should exceed the period $t_N$ of the "normal" pulse repetition rate. Thus, by analysing the outputs 109, 111 of Monostables 107, 108, (e.g. see Fig 6B below) it is possible to deduce whether the signal being transmitted along the fibre-optic link is of a low pulse-repetition frequency (representing safe operating temperatures of the DBR), a high pulse-repetition frequency (representing an overheated condition of the DBR), or non-existent (representing no operation of the DBR). This analysis amounts to . . .

a) Monostable 108 'Set' (a HIGH at 111)
-DBR operating at safe temperatures

b) Monostable 107 'Set' and Monostable 108 'Reset' (only 109 HIGH)
-DBR overheated, register ALARM.

c) Monostable 107 and Monostable 108 both 'Reset' (both LOW)
- DBR not in operation; also register ALARM if DBR believed operative.

It can be seen that detecting monostable 108 'Set', is reassuring. If device 108 is not 'Set', examination of the monostable 107 output 109 will indicate whether the DBR 1 is overheated or unenergized, if it is desired to know which alarm condition has been established.

Alternatively, the Fig 6A photodetector can be a phototransistor instead of a diode. It can be interchanged with its series resistor, so that the Schmitt's output goes to 'O' for each received pulse. The NAND-Schmitt could be replaced by a non-inverting CMOS gate (e.g. two cascaded NAND-gates), preferably with positive feedback applied, to promote switching. Or the Fig 6B circuit can be used, in which NAND-Schmitt 106 and the two retriggerable monostables 107, 108 of Fig 6A are replaced by a type 4538 C-MOS dual monostable multivibrator 112.

This integrated circuit (of Fig 6B) has external RC circuit connections which establish desired periods of astability, and the facility to have these periods retriggered by inputs at 110, 112 (compare Fig 6A). An important feature of the 4538 is that both of its inputs 110, 112 are internally buffered with Schmitt triggers thereby permitting slow rising waveforms to be fed to these inputs, without requirement for device 106 of Fig 6A. Being a C-MOS device, the input impedances at 110, 112 are very high, and for instance the photodiode biasing resistor 102 can be very high in value without itself being unduly loaded at 110. Resistors 103, 104 can themselves be high-valued, and establish quiescent bias of about 0.75 VDD at input 112 (corresponding to HIGH or logic 1). The astable period at the second monostable component which corresponds to 108, Fig 6A, is made high compared with even the lower rate of transmitter pulses, whereby if pulses are received, it will retrigger repeatedly and 111 its output will always remain 'Set'.

Like 107 in Fig 6A, the first monostable triggers on the positive going end edge of each incoming negative-going pulse from junction 107. A diode 114 reduces risk of damage to the input 112 by excessive negative-going voltages.

As to the second monostable component of circuit 113, the input is referenced 110 and the 1-output 111 (analogously to 108, Fig 6A). C-MOS AND-gates 115 and 116 analyse outputs 109 and 111 (see like outputs in Fig 6A). A low at 109 is sensed by a HIGH at its negative output which is AND-ed with any negative output at 111, in gate 115 and Darlington amplifier 117. An output here shows no operation, i.e. no pulses received, one alarm condition which certainly should be indicated. Gate 116 gives an indication for a O at 111 but a 1 at 109, i.e. the overheated condition mainfested as discussed with reference to Fig 6A. Safe operation is detected by a Darlington 118 amplifying a HIGH at output 111.

Thus, Fig 6B is generally equivalent in function to the circuit of Fig 6A, but more detailed and reliable.

Obviously, the circuits of Fig 2A or 2B could be adapted to denote "DBR overheated" by a lower pulse frequency than that for safe temperatures, if preferred. Changing over the inputs to comparator 19 would achieve this, but it is not recommended because failure of the specific voltage converter itself is most likely to lead to a positive voltage, and we would therefore like the positive voltage to be the danger signal.

An extra inverter stage is preferable, e.g. after the comparator and before transistor 37, and would enable high frequency outputs to mean safe (not danger) temperatures without changing over the comparator inputs. The receiver modification would be routine. Presently preferred is the circuitry illustrated.

## Claims

1. A temperature sensor for an electrical load resistor (1) e.g. a dynamic braking resistor (DBR) subject to sudden large loads or high voltages, comprising:
a series resistor element (16) element of negligible temperature coefficient of resistance connected in series with the load resistor (1) to form a first junction (J1):
a shunt element pair (17, 18) forming a second junction (J2) and connected in shunt across the load resistor/series element combination (1, 16):
a comparator (19), arranged to trip to deliver different voltage levels corresponding to whether the electrical resistance of the load resistor (1) has reached an overheated value or not; and
a frequency-controllable pulse generator (40, 46, 48) to launch electromagnetic wave pulses of either of two different parameters, such as repetition frequencies dependent on which of said different voltage levels has been delivered to it.

2. A temperature sensor according to Claim 1 wherein the comparator (19) comprises an instrumental grade direct voltage operational amplifier, having a split power supply relative to earth, and arranged to trip to an input voltage preset by a potentiometer (20).

3. A temperature sensor according to Claim 2 having inter-stage coupling means (22) of time constant, if any, only substantial enough to eliminate electrical fluctuations unlikely to have arisen from temperature. changes in the load resistor (1) and, if necessary, spike-removing resistors (21A, 21B), whereby response times remain favourably low.

4. A temperature sensor according to Claim 2 having inter-stage coupling means (21C,21D) of enough resistance to swamp source impedance differentials.

5. A temperature sensor according to Claim 2 or 4 having interstage RC coupling means of values selected such that the coupled signal is denotive of the surface temperature, rather than the average overall temperature, of the load resistor.

6. A temperature sensor according to any of Claims 1-5 wherein the pulse generator includes a multivibrator (40), eg. of the CMOS type, supplied from a supply line (45) deriving power from a source (52), from which is also derived the measuring voltage applied to the load resistor (1) with its series resistor (16).

7. A temperature sensor according to Claim 6 wherein the source (52) is subjected to stabilization (24) to provide the supply (45), which also energizes the comparator (19).

8. A temperature sensor which differs from that of Claim 1 only in being sensitive to ac biases on the load resistor, characterized by, in addition to the Claim 1 definition, means to bias the load resistor (1) with an ac measuring voltage, a precision rectifier (55 or 56) connected to each junction (J1 or J2) and a smoothing circuit or precision peak-level detector coupling each rectifier to the comparator (19), which trips at dc voltage levels as defined in Claim 1.

9. A temperature sensor according to any of Claims 1-8 characterized by coupling means (77,78) connected via a network (79) including a potential divider (80,81) to a voltage line (52) such that too low a voltage on the latter will cause coupling means (77,78) to inhibit the pulse generator (40), if desired the network also including time constant means (83) to simulate said too low a voltage always for a short time after each switch-on of said voltage line (52).

10. A temperature sensor according to Claim 9 characterized by a normally reverse-biased unidirectional conductor (75A) connected between said voltage line (52) and pulse transmitter enabling means (46), whereby, even in the presence of any charge on a reservoir capacitor (50), the conductor (75A) de-energizes said enabling means (46) rapidly after each switch-off of said voltage line (52).

11. A temperature sensor according to any of Claims 1-10 characterized by a continuously variable element (20) including a wiper for presetting purposes, and a large enough resistance (70) connecting said wiper to such an alarm-simulating voltage source (26,71,72), whereby only on open-circuit of the wipe, an alarm condition will be preset via said large enough resistance (70).

12. A pulse receiver characterized by a pulse repetition discriminator (13), with "NORMAL" and "FAULT" outputs (57, 58) wherein a "FAULT" output corresponds to an incorrect repetition rate or no pulses present, and a logic circuit (64-68) to indicate the existence of either of the two fault conditions; for cooperation with the transmitter of any of Claims 1-11 via a transducer (12) and a fibre-optic electrically isolating intermediary.

13. A pulse receiver according to Claim 12, characterized in that, "overheated" and "normal" pulses have different repetition rates, and the discriminator (13) comprises a first retriggerable monostable (107) having such an a-stable period ($t_1$) and such triggering characteristics (e.g. leading or trailing edges) such that it will be continuously in its triggered condition in response to one type of pulse train but will reset to its monostable condition after each pulse of the other type of train.

14. A pulse receiver according to Claim 13, characterized by a second retriggerable monostable (108) coupled to the output of the first (107), and having the longer a-stable period ($t_2$) such that, when the first (107) is reset for each pulse of the other type of train, the second is set continuously in its triggered, a-stable state, whereas when the first retriggerable monostable is either set continuously in a state (due to "overheated" pulses), or is continuously in a reset state (due to failure of pulses to reach the first monostable 107), the second retriggerable monostable (108) will reset to its stable condition.

15. A pulse receiver according to Claim 14, wherein the retriggerable monostables (107, 108) trigger on rising edges, the received pulses have a standard period, the "NORMAL" pulse period ($T_N$) is long compared with the difference between $t_H$ -

(overheated pulse period) and said standard period, and $t_1$ is longer than $t_N$ (but short enough to react reasonably quickly to faults).

16. A pulse receiver according to Claim 14 or 15, wherein the output (109) of the first monostable (107) is accessible, in order to identify, whenever a "FAULT" condition has been identified, whether no pulses (failure to arrive), or "overheated" pulses are being received.

17. A pulse receiver according to Claims 14, 15 or 16 comprising a CMOS NAND-Schmitt (106) in the input to the first retriggerable monostable (107).

# Fig. 1.

Fig. 2A.

D.C. CURRENT

EP 0 393 814 A1

*Fig. 2B*

Fig.2B (cont.)

# Fig. 3.

TRANSMITTED PULSE-TRAIN
CORRESPONDING TO "SAFE"
CONDITION.

TIME ⟶

W

36

TRANSMITTED PULSE-TRAIN
CORRESPONDING TO
"OVERHEATED" CONDITION.

TIME ⟶

W

35

*Fig. 4.*

A.C. CURRENT

52 AC

1

17

55
PRECISION RECTIFIER

SMOOTHING CIRCUIT

21A  19  31  23

22

J1

J2

16

18

PRECISION RECTIFIER

SMOOTHING CIRCUIT

21B  32

56

0V

−VE

EP 0 393 814 A1

Fig. 5.

RECEIVER

FIBRE-OPTIC CABLE

PULSE DETECTOR — 12

PULSE-REPETITION FREQUENCY DETECTING CIRCUIT — 13

+12V — 14

OUTPUT x

OUTPUT y

65

66

64

68

67

58

57

62

60

61

59

10

+

# Fig. 6A.

Fig. 6B

EP 0 393 814 A1

# Fig. 7.

INPUT WAVEFORM TO MONOSTABLE 1

OUTPUT WAVEFORM OF MONOSTABLE -1

OUTPUT WAVEFORM OF MONOSTABLE -2

NORMAL OPERATION OF D.B.R.

OVERHEATED OPERATION OF D.B.R.

D.B.R. SWITCHED OFF

DIRECTION OF INCREASING TIME

EP 0 393 814 A1

| | **DOCUMENTS CONSIDERED TO BE RELEVANT** | | EP 90301386.0 |
|---|---|---|---|

| Category | Citation of document with indication, where appropriate, of relevant passages | Relevant to claim | CLASSIFICATION OF THE APPLICATION (Int Cl⁵) |
|---|---|---|---|
| D,A | US - A - 4 035 692<br>(LUY et al.)<br>   * fig. 1; column 2, line 19 - column 5, line 13 *<br>-- | 1,2 | G 01 K 7/16<br>G 01 K 7/20 |
| A | FR - A1 - 2 588 128<br>(PORSCHE)<br>   * fig. 2; page 5, line 8 - page 6, line 30 *<br>-- | 1,2 | |
| A | US - A - 3 964 315<br>(ENGELHARDT)<br>   * Fig. 1-3; column 3, lines 33-39 *<br>---- | 1 | |

| | | | TECHNICAL FIELDS SEARCHED (Int Cl⁵) |
|---|---|---|---|
| | | | G 01 K 7/00<br>H 02 H 7/00 |

The present search report has been drawn up for all claims

| Place of search | Date of completion of the search | Examiner |
|---|---|---|
| VIENNA | 08-05-1990 | BURGHARDT |